# EUROPÄISCHE PATENTSCHRIFT

(11) **EP 0 555 184 B1**
(45) Veröffentlichungstag und Bekanntmachung des Hinweises auf die Patenterteilung: **17.07.1996**
(21) Anmeldenummer: 93810060.9
(22) Anmeldetag: 29.01.1993
(51) Int. Cl.: C01B 21/072, C08K 3/28, C08L 63/00

(54) **Füllstoff für wärmeleitende Kunststoffe**
Filler for heat conducting polymers
Charge pour des résines plastiques ayant une conductivité thermique

(30) Priorität: 07.02.1992 CH 380/92
(43) Veröffentlichungstag der Anmeldung: 11.08.1993
(73) Patentinhaber: CIBA-GEIGY AG, 4002 Basel (CH)
(72) Erfinder: Bujard, Patrice, Dr., CH-1784 Courtepin (CH); Cojanu, Ileana, CH-1009 Pully (CH)

(56) Entgegenhaltungen:
- EP-A- 0 382 188
- US-A- 4 764 489
- DATABASE WPIL Derwent Publications Ltd., London, GB; AN 90-063284
- DATABASE WPIL Derwent Publications Ltd., London, GB; AN 92-061825

## Beschreibung

Die vorliegende Erfindung betrifft ein Epoxidgiessharz, enthaltend als Füllstoff eine Zusammensetzung aus zwei verschiedenen Fraktionen von Aluminiumnitridteilchen mit jeweils unterschiedlichen Teilchendurchmessern, und die Verwendung der Kunststoffzusammensetzung als Formmassen zur Herstellung von Formteilen und Verbundwerkstoffen.

Es ist bekannt, dass Kunststoffe schlechte Wärmeleiter sind. Zur Verbesserung der Wärmeleitfähigkeit werden Kunststoffen daher feinteilige metallische oder mineralische Füllstoffe einverleibt. Die Verwendung von metallischen Füllstoffen ist nur möglich, wenn keine elektrischen Isoliereigenschaften gefordert sind. Als mineralische Füllstoffe werden häufig Quarz, amorphes Silica, Aluminiumnitrid oder Aluminiumoxid eingesetzt, mit denen man im allgemeinen eine thermische Leitfähigkeit bis zu etwa 3,5 W/mK erzielen kann. Noch höhere Leitfähigkeiten bedingen einen hohen Gehalt dieser Füllstoffe von zum Beispiel bis zu etwa 80 Gew.-% (etwa 60 Vol.-%). Ein hoher Füllstoffgehalt beeinträchtigt aber auch die Verarbeitbarkeit. Zur Vermeidung des Abriebs bei Werkzeugen werden zweckmässig sphärische Teilchen eingesetzt. Es ist ferner bekannt, dass der Abrieb durch die Wahl von Teilchen geringer Grösse vermindert werden kann, was aber auch zu einer Verminderung des Füllgrades und damit der Wärmeleitfähigkeit führt.

P. Bujard et al. beschreiben im Fifth IEEE SEMI-THERM™ Symposium, San-Diego, S. 126-130 (1989) die Verwendung von AlN mit unregelmässiger Teilchengestalt und einem mittleren Teilchendurchmesser von etwa 30 µm als wärmeleitenden Füllstoff für mit Anhydriden gehärtete Epoxidharze. Die Viskosität der Mischungen aus AlN und dem ungehärteten Epoxidharz steigt bei Füllgraden ab etwa 50 Vol.-% stark an. Man kann einen Gehalt von 62 Vol.-% AlN und hierbei eine Wärmeleitfähigkeit von 4,22 W/mK erzielen. Auf Grund der hohen Viskosität ist die Zusammensetzung nur sehr schwierig zu verarbeiten, weil Lufteinschlüsse (Blasenbildung) praktisch unvermeidbar sind. Diese Zusammensetzungen sind für einen technischen Einsatz nicht geeignet.

In der EP-A-0 382 188 wird eine thermisch leitfähige Zusammensetzung auf Basis von Organosiloxanen offenbart, die ein Gemisch von thermisch leifähigen Füllstoffen enthält, das aus fein verteiltem Aluminiumnitrid (AlN) mit einer durchschnittlichen Partikelgrösse von kleiner als 1 µm und einem mit Organosiloxanen verträglichen Füllstoff mit einer Partikelgrösse von 10 bis 100 µm, wie beispielsweise Metall- oder Metallnitridpulver, besteht. Die thermischen Leitfähigkeitswerte der mit diesen Füllstoffen versehenen Organosiloxanen sind noch gering.

Derwent Abstract JP-A-2016135 beschreibt eine Kautschukmischung, die 500 bis 670 Gew.-% eines Gemisches aus AlN verschiedener Partikelgrösse enthält. Diese Kautschukmischung wird vorteilhaft zur Herstellung von Wärme austrahlende Schichten verwendet.

Im Derwent Abstract JP-A-4008740 werden anorganische Pulver, die pulverförmige Nitride oder Oxynitride enthalten, Versiegelungs- und Isolationsmassen zugesetzt, um deren Eigenschaften bei der Wärmebestrahlung zu verbessern.

Es wurde nun gefunden, dass man in Giessharzen auf Basis von Epoxidharzen bei hohen Füllgraden höhere thermische Leitfähigkeiten von 4 bis über 5 W/mK erzielen kann, wobei die thermischen Ausdehnungskoeffizienten nahe bei denen von Metallen, wie zum Beispiel Kupfer, Silber oder Gold, liegen können, wenn man als Füllstoff ein Gemisch von Aluminiumnitridfraktionen mit unterschiedlicher Partikelgrösse verwendet und die AlN-Partikel gesinterte Agglomerate sind. Es wurde ferner gefunden, dass mit diesem Füllstoff Giessharze mit niedrigerer Viskosität und sehr hohem Füllstoffgehalt erhalten werden, die eine ausgezeichnete Giessfähigkeit und damit Verarbeitbarkeit aufweisen. Es wurde auch gefunden, dass man mit dem Gemisch überraschend höhere Füllgrade und damit höhere Wärmeleitfähigkeiten erzielen kann als mit den einzelnen Fraktionen.

Ein Gegenstand der Erfindung ist somit ein Giessharz auf Basis von Epoxidharzen, dadurch gekennzeichnet, dass es, bezogen auf das Giessharz, in gleichmässiger Verteilung 70 bis 90 Gew.-% eines pulvrigen gemisches aus Aluminiumnitrid (AlN) in Form von gesinterten Agglomeraten mit Fraktionen unterschiedlicher Teilchengrösse, das dadurch gekennzeichnet ist, dass es enthält:
(1) 80 bis 50 Gewichts-% AlN in Form von gesinterten Agglomeraten mit einem mittleren Teilchendurchmesser von 30 bis 50 µm, und
(2) 20 bis 50 Gewichts-% AlN in Form nicht-gesinterter Teilchen und einem mittleren Teilchendurchmesser von 0,1 bis 5 µm.

In einer bevorzugten Ausführungsform enthält das Giesharz
a) 77,5 bis 55 Gewichts-% der Komponente (1), und
b) 22,5 bis 45 Gewichts-% der Komponente (2).

In einer noch bevorzugteren Ausführungsform enthält das Giesharz
a) 75 bis 60 Gewichts-% der Komponente (1), und
b) 25 bis 40 Gewichts-% der Komponente (2).

In einer besonders bevorzugten Ausführungsform enthält das Giesharz
a) 75 bis 65 Gewichts-% der Komponente (1), und
b) 25 bis 35 Gewichts-% der Komponente (2).

Der mittlere Teilchendurchmesser der Komponente (1) beträgt bevorzugt 35 bis 45 µm und der mittlere Teilchendurchmesser der Komponente (2) beträgt bevorzugt 1 bis 2 µm.

Der mittlere Teilchendurchmesser der Komponenten (1) und (2) kann durch den Gehalt an Fraktionen unterschiedlicher Partikelgrössen eingestellt oder durch die Auswahl von Fraktionen mit bestimmten Grössenbereichen erhalten werden. So kann die Komponente (1) zum Beispiel
a) 4 bis 40 Gew.-% AlN-Teilchen mit einem Durchmesser von 50 bis 100 µm,
b) 35 bis 70 Gew.-% AlN-Teilchen mit einem Durchmesser von 20 bis kleiner als 50 µm, und
c) 4 bis 25 Gew.-% AlN-Teilchen mit einem Durchmesser kleiner als 20 µm enthalten, wobei sich die Prozente zu 100 Gew.-% addieren. Teilchen mit einem Durchmesser von mehr als 100 µm sind bevorzugt nicht enthalten, aber bis zu einer Menge von höchstens 1 Gew.-% tolerierbar, bezogen auf diese Gesamtmischung.

Bevorzugter enthält die Komponente (1)
a) 10 bis 35 Gew.-% AlN-Teilchen mit einem Durchmesser von 50 bis 100 µm,
b) 45 bis 70 Gew.-% AlN-Teilchen mit einem Durchmesser von 20 bis kleiner als 50 µm, und
c) 5 bis 20 Gew.-% AlN-Teilchen mir einem Durchmesser kleiner als 20 µm, wobei sich die Prozente zu 100 Gew.-% addieren.

Noch bevorzugter enthält die Komponente (1)
a) 20 bis 35 Gew.-% AlN-Teilchen mit einem Durchmesser von 50 bis 100 µm,
b) 55 bis 70 Gew.-% AlN-Teilchen mit einem Durchmesser von 20 bis kleiner als 50 µm, und
c) 5 bis 15 Gew.-% AlN-Teilchen mit einem Durchmesser kleiner als 20 µm, wobei sich die Prozente zu 100 Gew.-% addieren.

Die Komponente (2) besteht bevorzugt aus Teilchen mit einem Durchmesser von 3 µm oder weniger als 3 µm, zum Beispiel 0,1 bis 3 µm. Anteile der Komponente (2) und der Komponente c) können bezüglich des Teilchendurchmessers überlappen.

Die Gemische können durch Vermischen der Komponenten hergestellt werden. Teilchenförmige Aluminiumnitride in Form von gesinterten Agglomeraten sind bekannt und kommerziell erhältlich. Fraktionen mit definierten Bereichen der Teilchengrössen sind durch übliche Trennverfahren erhältlich. Sinterverfahren zur Herstellung von agglomerierten Teilchen sind ebenfalls bekannt. Teilchenförmige Aluminiumnitride der Komponente (2) sind bekannt und käuflich; es handelt sich um nicht agglomerierte Teilchen.

Die Gemische eignen sich hervorragend als Füllstoffe für Giessharze auf Basis von Epoxidharzen, um die Wärmeleitfähigkeit zu erhöhen, wobei die Abrasivität der Zusammensetzung gering ist.

Unter den Epoxidharzen sind bevorzugt Glycidylverbindungen mit durchschnittlich zwei Epoxidgruppen im Molekül. Als Glycidylverbindungen kommen vor allem solche mit zwei an ein Heteroatom (z.B. Schwefel, vorzugsweise Sauerstoff oder Stickstoff) gebundenen Glycidylgruppen, β-Methylglycidylgruppen oder 2,3-Epoxycyclopentylgruppen in Frage; genannt seien insbesondere Bis-(2,3-epoxycyclopentyl)-ether; Diglycidylether von mehrwertigen aliphatischen Alkoholen, wie 1,4-Butandiol, oder Polyalkylenglykolen, wie Polypropylenglykole; Diglycidylether von cycloaliphatischen Polyolen, wie 2,2-Bis-(4-hydroxycyclohexyl)-propan; Diglycidylether von mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5'-dibromphenyl)-propan, 1,3-Di-(p-hydroxyphenyl)-ethan; Di-(β-methylglycidyl)-ether der oben angeführten zweiwertigen Alkohole oder zweiwertigen Phenole; Diglycidylester von Dicarbonsäuren, wie Phthalsäure, Terephthalsäure, Δ₄-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N'-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N'-Dimethyl-N,N'-diglycidyl-bis-(p-aminophenyl)-methan; N',N''-Diglycidyl-N-phenyl-isocyanurat; N,N'-Diglycidylethylenharnstoff; N,N'-Diglycidyl-5,5-dimethyl-hydantoin, N,N'-Diglycidyl-5-isopropyl-hydantoin, N,N-Methylen-bis-(N',N'-diglycidyl-5,5-dimethylhydantoin), 1,3-Bis-(N-glycidyl-5,5-dimethylhydantoin)-2-hydroxypropan; N,N'-Diglycidyl-5,5-dimethyl-6-isopropyl-5,6-dihydro-uracil, Triglycidylisocyanurat.

Eine bevorzugte Gruppe von Epoxidharzen sind glycidylierte Novolake, Hydantoine, Aminophenole, Bisphenole und aromatische Diamine oder cycloaliphatische Epoxidverbindungen. Besonders bevorzugte Epoxidharze sind glycidylierte Kresolnovolake, Bisphenol-A-und Bisphenol-F-diglycidylether, Hydantoin-N,N'-bisglycid, p-Aminophenoltriglycid, Diaminophenylmethantetraglycid, Vinylcyclohexendioxid, 3,4-Epoxycyclohexylmethyl-3,4-epoxycyclohexancarboxylat oder Mischungen hiervon.

Geeignet sind auch vorreagierte Addukte solcher Epoxidverbindungen mit Epoxidhärtern, zum Beispiel ein Addukt aus Bisphenol-A-diglycidylether und Bisphenol-A, oder mit Oligoestern mit zwei terminalen Carboxylgruppen und Epoxiden vorreagierte Addukte.

Als Härter für Epoxidharze kommen saure oder basische Verbindungen in Frage. Als geeignete Härter seien zum Beispiel genannt: Amine, wie zum Beispiel aliphatische, cycloaliphatische oder aromatische, primäre, sekundaäre und tertiäre Amine, z. B. Ethylendiamin , Hexamethylendiamin, Trimethylhexamethylendiamin, Dietylentriamin, Triethylentetraamin, Teraethylenpentaamin, N,N-Dimethylpropylen-1,3-diamin, N,N-Diethylpropylen-1,3-diamin, 2,2-Bis-(4'-aminocyclohexyl)-propan, 3,3,5-Trimethyl-3-(aminomethyl)cyclohexylamin (Isophorondiamin), Mannichbasen wie z. B. 2,4,6-Tris-(dimethylaminomethyl)-phenol, m-Phenylendiamin, p-Phenylendiamin, Bis-(4-aminophenyl)-methan, Bis-(4-aminophenyl)-sulfon, Xylylendiamin; Aminoalkohole wie z. B. Aminoethanol, 1,3-Aminopropanol, Diethanolamin oder Triethanolamin; Addukte von Acrylnitril an Polyalkylenpolyamine oder Monoepoxiden (Ethylenoxid, Propylenoxid) an Polyalkylenpolyamine (Diethylentriamin, Triethylentetraamin; Addukte aus einem Ueberschuss Polyaminen (Diethylentriamin, Triethylentetraamin) und Polyepoxiden wie z. B. Bisphenol-A-diglycidylethern; Polyamide, insbesondere solche aus aliphatischen Polyaminen (Diethylentriamin, Triethylentetraamin) und di- oder trimerisierten ungesättigten Fettsäuren (dimerisierte Leinölfettsäure, Versamid®); Dicyandiamid; Polysulfide (Thiokol®); Anilin-Formaldehyde; mehrwertige Phenole (Resorcin, 2,2-Bis-(4-hydroxyphenyl)-propan) oder Phenol-Formaldehyd-Harze; mehrbasische Carbonsäuren und ihre Anhydride, z. B. Phthalsäureanhydrid, Tetrahydrophthalsäureanhydrid, Hexahydrophthalsäureanhydrid, 4-Methylhexahydrophthalsäureanhydrid, 3,6-Endomethylen-tetrahydiophthalsäreanhydrid, 4-Methyl-3,6-endomethylen-tetrahydrophthalsäureanhydrid (Methylnadicanhydrid), 3,4,5,6,7,7-Hexachlor-endomethylen-tetrahydrophthalsäureanhydrid, Bernsteinsäureanhydrid, Adipinsäureanhydrid, Trimethyladipinsäureanhydrid, Sebacinsäureanhydrid, Maleinsäureanhydrid, Dodecylbernsteinsäureanhydrid, Pyromellitsäuredianhydrid, Trimellitsäureanhydrid, Benzophenontetracarbonsäuredianhydrid, oder Gemische solcher Anhydride.

Eine bevorzugte Gruppe von Härtern sind Polyamine, Novolake, Polyaminoamide und Polycarbonsäureanhydride.

Die Epoxidharze können auch zusätzlich mit Härtungsbeschleunigern oder nur mit thermischen Härtungskatalysatoren gehärtet werden. Beispiele sind tertiäre Amine, deren Salze oder quaternäre Ammoniumverbindungen (2,4,6-Tris-(dimethylaminomethyl)phenol, Benzyldimethylamin, 2-Ethyl-4-methylimidazol, Triamylammoniumphenolat); Mono- oder Polyphenole (Phenol, Diomenthan, Salicylsäure); Bortrifluorid und seine Komplexe mit organischen Verbindungen wie z. B. Bortrifluorid-Etherkomplexe und Bortrifluorid-Amin-Komplexe (BF₃-Monoethylamin-Komplex); Phosphorsäure und Triphenylphosphit.

Härtungsbeschleuniger und Katalysatoren werden üblicherweise in einer Menge von 0,1 bis 10 Gew.-% zugegeben, bezogen auf das Epoxidharz. Härter für Epoxidharze werden im allgemeinen in äquimolaren Mengen verwendet, bezogen auf die Epoxidgruppen und funktionellen Gruppen eines Härters.

Der erfindungsgemässen Giessharze können weitere Additive zur Verbesserung der Verarbeitungseigenschaften, der mechanischen, elektrischen und thermischen Eigenschaften, der Oberflächeneigenschaften und der Lichtstabilität einverleibt sein, zum Beispiel feinteilige Füllstoffe, Verstärkerfüllstoffe, Weichmacher, Gleit- und Entformungsmittel, Haftvermittler, Antioxidantien, Wärme- und Lichtstabilisatoren, Pigmente und Farbstoffe. Werden weitere Füllstoffe und/oder Verstärkerfüllstoffe mitverwendet, so beträgt deren Höchstmenge zweckmässig zusammen mit dem pulvrigen Gemisch höchstens 95 Gew.-%, bevorzugt höchstens 90 Gew.-%, bezogen auf die Zusammensetzung.

Die Herstellung der erfindungsgemässen Giessharze kann nach in der Giessharztechnik bekannten Verfahren erfolgen, zum Beispiel durch Vermischen des feinteiligen wärmeleitenden Füllstoffs mit dem Epoxidharz.

Bei Giessharzen wird der feinteilige Füllstoff zweckmässig vor der Formgebung und vor dem Härten bzw. Vernetzen zugesetzt, zum Beispiel durch gemeinsames Vermischen des härtbaren Epoxidharzes mit dem Füllstoff, wobei dieser zuvor einer Komponente einverleibt werden kann.

Das pulvrige Gemisch kann dem Giessharz in Form des Gemischs selbst oder durch die aufeinanderfolgende Zugabe einzelner Komponenten einverleibt werden.

Das erfindungsgemässe Giessharz eignet sich besonders zur Herstellung von hochgefüllten. Formkörpern, die Wärmeleitfähigkeiten bei relativ niedrigen Temperaturen von über 4 und sogar über 5 W/mK aufweisen können. Trotz der hohen Füllgrade ist die Viskosität der Giessharze noch so niedrig, dass sie gegebenenfalls bei Erwärmung und/oder Vibration fliessfähig sind und gut zu Formteilen verarbeitet werden können, zum Beispiel mittels Press-, Giess- oder Spritzgussverfahren.

Vorzugsweise enthält das erfindungsgemässe Giessharz auf der Basis von Epoxidharzen in gleichmässiger Verteilung 75 bis 90 Gew.-% und besonders bevorzugt 78 bis 85 Gew.-% des pulvrigen Gemischs von Aluminiumnitriden.

In Frage kommende Epoxidharze sind zuvor erwähnt worden. Bevorzugte Epoxidharze sind solche auf der Basis von gegebenenfalls vorverlängerten Bisphenoldiglycidylethern, zum Beispiel Bisphenol-A- und Bisphenol-F-glycidylether, und Polycarbonsäureanhydriden, zum Beispiel Phthalsäure- und Hydrophthalsäureanhydride als Härtern, die bevorzugt in Anwesenheit eines Härtungsbeschleunigers gehärtet werden, zum Beispiel von N-Methylimidazol.

Das erfindungsgemässe Giessharz ist eine wertvolle Formmasse zur Herstellung wärmeleitender Formteile aller Art, zum Beispiel Filmen, Folien, Bändern, Fasern, Platten, Halbzeug, Formkörpern und Gehäusen. Das erfindungsgemässe Giessharz eignet sich besonders zur Herstellung von Heizkörpern, Klebharzen und Schmelzklebern bevorzugt für die Verbindung von Metallen, sowie als wärmeleitendes Versiegelungsmaterial besonders für elektrische und elektronische Bauteile.

Ein weiterer Gegenstand der Erfindung ist die Verwendung des erfindungsgemässen Giessharzes zur Herstellung von wärmeleitenden Formteilen und Verbundwerkstoffen.

Ein anderer Gegenstand der Erfindung ist die Verwendung des Giessharzes als Klebharz zur Verbindung von Metallen oder als Versiegelungsmaterial für elektrische und elektronische Bauteile.

Die nachfolgenden Beispiele erläutern die Erfindung näher. Die Wärmeleitfähigkeit wird durch die thermische Vergleichsmethode mit Pyroceram® 9606 als Referenzmaterial gemessen. Die Methode ist von L. C. Hulstrom et al. in "Round-Robin Testing Of Thermal Conductivity Reference Materials", Proceeding of thermal conductivity 19, October 20-23, 1985, Cookevelli, Tennesse, edited by D.W. Yarbrough, beschrieben.
Beispiel 1-8: Für die Herstellung eines Giessharzes werden folgende Aluminiumnitridfraktionen ausgewählt (Hersteller: Hermann C. Starck Berlin):
1. Typ AlN K, rundliche, gesinterte AlN-Agglomerate mit
a) 25 Gew.-% Teilchen mit einem Durchmesser von 50 bis 100 µm,
b) 65 Gew.-% Teilchen mit einem Durchmesser von 20 bis 50 µm,
c) 10 Gew.-% Teilchen mit einem Durchmesser von bis zu 20 µm.
Der mittlere Teilchendurchmesser beträgt 40 µm.
2. Typ AlN C, AlN-Teilchen mit einem Durchmesser von 0,1 bis 5 µm; mittlerer Teilchendurchmesser 1,4 µm.
Die in nachfolgender Tabelle 1 angegebenen Mengen der 1. Komponente und der 2. Komponente werden in einer Polypropylenflasche während 7 Stunden gerührt und vermischt (Rührer mit beweglichen Rührblättern).
Das pulvrige Gemisch wird bei 80 °C unter Rühren einem Epoxidgiessharz aus 100 Gew.-Teilen Bisphenol-F-diglycidylether, 96 Gew.-Teilen Hexahydrophthalsäureanhydrid und 0,4 Gew.-Teilen N-Methylimidazol in gleichmässiger Verteilung einverleibt. Die Menge ist so bemessen, dass die Zusammensetzung unter Vibration noch giessfähig ist. Die Zusammensetzung wird in eine Aluminiumform gegossen und anschliessend 4 Stunden bei 80 °C und 18 Stunden bei 120 °C gehärtet. Der Gehalt an pulvrigem Gemisch wird über die Dichte bestimmt und ist in Tabelle 1 angegeben, ebenso die gemesenen Wärmeleitfähigkeiten.

**Tabelle 1**

| Beispiel Nr. | Verhältnis AlN K/AlN C (Gew.-%/Gew.-%) | Gehalt (Vol.-%/Gew.-%) | Leitfähigkeit (W/mK) |
|---|---|---|---|
| 1 | 80/20 | 59,8/80 | 4,1 |
| 2 | 75/25 | 61,8/81 | 5,05 |
| 3 | 74/26 | 63,9/82,3 | 4,9 |
| 4 | 72/28 | 61,8/81 | 5,3 |
| 5 | 70/30 | 62,3/81,3 | 4,5 |
| 6 | 65/35 | 62,8/81,6 | 5,2 |
| 7 | 60/40 | 61,3/80,6 | 4,8 |
| 8 | 55/45 | 60,3/80 | 4,4 |

Beispiel 9: Mit der AlN K/AlN C-Mischung gemäss Beispiel 3 wird folgendes Giessharz hergestellt:
62 Gewichtsteile Epoxycresolnovolak,
31 Gewichtsteile Cresolnovolak,
0,75 Gewichtsteile 2-Phenylimidazol,
575 Gewichtsteile AlN K/AlN C-Mischung gemäss Beispiel 3,
2 Gewichtsteile Russ, und
1,4 Gewichtsteile Op-Wachs.
Die Mischung wird gemäss Beispiel 1 zu Prüfkörpern verarbeitet. Der Gehalt an AlN K/AlN C-Mischung beträgt 69 Vol.-%, die Leitfähigkeit beträgt 5,2 W/mK.
Beispiel 10: Es wird wie in Beispiel 9 verfahren und 458 Gewichtsteile AlN K/AlN C-Mischung, 0,8 Gewichtsteile Russ und 1,1 Gewichtsteile Op-Wachs verwendet. Der Gehalt an AlN K/AlN C-Mischung beträgt 65 Vol.-%, die Leitfähigkeit beträgt 3,6 W/mK.

## Patentansprüche

1. Giessharz auf Basis von Epoxidharzen, dadurch gekennzeichnet, dass es, bezogen auf das Giessharz, in gleichmässiger Verteilung 70 bis 90 Gew.-% eines pulvrigen Gemisches aus Aluminiumnitrid (AlN) in Form von gesinterten Agglomeraten mit Fraktionen unterschiedlicher Teilchengrösse enthält, wobei
(1) 80 bis 50 Gewichts-% AlN in Form von gesinterten Agglomeraten mit einem mittleren Teilchendurchmesser von 30 bis 50 µm, und
(2) 20 bis 50 Gewichts-% AlN in Form nicht-gesinterter Teilchen und einem mittleren Teilchendurchmesser von 0,1 bis 5 µm vorliegen.

2. Giessharz gemäss Anspruch 1, dadurch gekennzeichnet, dass es
a) 77,5 bis 55 Gewichts-% der Komponente (1), und
b) 22,5 bis 45 Gewichts-% der Komponente (2) enthält.

3. Giessharz gemäss Anspruch 1, dadurch gekennzeichnet, dass der mittlere Teilchendurchmesser von Komponente (1) 35 bis 45 µm und von Komponente (2) 1 bis 2 µm beträgt.

4. Giessharz gemäss Anspruch 1, dadurch gekennzeichnet, dass die Komponente (1)
a) 4 bis 40 Gew.-% AlN-Teilchen mit einem Durchmesser von 50 bis 100 µm,
b) 35 bis 70 Gew.-% AlN-Teilchen mit einem Durchmesser von 20 bis kleiner als 50 µm, und
c) 4 bis 25 Gew.-% AlN-Teilchen mit einem Durchmesser kleiner als 20 µm enthält, wobei sich die Prozente zu 100 Gew.-% addieren.

5. Giessharz gemäss Anspruch 1, dadurch gekennzeichnet, dass die Komponente (2) aus Teilchen mit einem Durchmesser von 3 µm oder weniger als 3 µm besteht.

6. Giessharz gemäss Anspruch 1, dadurch gekennzeichnet, dass es als Harzkomponente eine Mischung aus Bisphenoldiglycidylethern und einem Polycarbonsäureanhydrid als Härter enthält.

7. Giessharz gemäss Anspruch 1, dadurch gekennzeichnet, dass es zusätzlich einen Härtungsbeschleuniger enthält.

8. Giessharz gemäss Anspruch 1, dadurch gekennzeichnet, dass es einen Bisphenol A- oder Bisphenol F-diglycidylether enthält.

9. Verwendung des Giessharzes gemäss Anspruch 1 zur Herstellung von wärmeleitenden Formteilen und Verbundwerkstoffen.

10. Verwendung des Giessharzes gemäss Anspruch 1 als Klebharz zur Verbindung von Metallen oder als Versiegelungsmaterial für elektrische und elektronische Bauteile.

## Claims

1. A casting resin based on epoxy resins, which comprises in uniform distribution 70 to 90% by weight, based on the casting resin, of a powdered mixture of aluminium nitride (AlN) in the form of sintered agglomerates with fractions of different particle size, in which
(1) 80 to 50% by weight of AlN is in the form of sintered agglomerates having a mean particle diameter of 30 to 50 µm, and
(2) 20 to 50% by weight of AlN is in the form of unsintered particles and has a mean particle diameter of 0.1 to 5 µm.

2. A casting resin according to claim 1, which comprises
a) 77.5 to 55% by weight of component (1), and
b) 22.5 to 45% by weight of component (2).

3. A casting resin according to claim 1, wherein the mean particle diameter of component (1) is 35 to 45 µm, and the mean particle diameter of component (2) is 1 to 2 µm.

4. A casting resin according to claim 1, wherein component (1) consists of
a) 4 to 40 % by weight of AlN particles having a diameter of 50 to 100 µm,
b) 35 to 70 % by weight of AlN particles having a diameter of 20 to smaller than 50 µm, and
c) 4 to 25 % by weight of AlN particles having a diameter smaller than 20 µm, the percentages adding up to 100 % by weight.

5. A casting resin according to claim 1, wherein component (2) consists of particles having a diameter of 3 µm or smaller than 3 µm.

6. A casting resin according to claim 1, which comprises as resin component a mixture of diglycidyl ethers of bisphenols and a polycarboxylic anhydride as hardener.

7. A casting resin according to claim 1, which additionally comprises a curing accelerator.

8. A casting resin according to claim 1, which comprises a diglycidyl ether of bisphenol A or of bisphenol F.

9. Use of a casting resin according to claim 1 for the fabrication of thermally conducting moulded parts and composites.

10. Use of a casting resin according to claim 1 as an adhesive resin for bonding metals or as a sealing material for electrical and electronic components.

## Revendications

1. Résine de coulée à base de résines époxydes caractérisée en ce qu'elle contient, par rapport à la résine de coulée, dans une répartition uniforme, de 70 à 90% en poids d'un mélange pulvérulent de nitrure d'aluminium (AlN) sous forme d'agglomérés frittés comportant des fractions de différentes tailles de particules :
(1) de 80 à 50% en poids d'AlN sous forme d'aggloméré fritté ayant une granulométrie moyenne de 30 à 50 µm, et
(2) de 20 à 50% en poids d'AlN sous forme de particules non frittées et ayant une granulométrie moyenne de 0,1 à 5 µm.

2. Résine de coulée selon la revendication 1, caractérisée en ce qu'elle contient :
(a) de 77,5 à 55% en poids du constituant (1) et
(b) de 22,5 à 45% en poids du constituant (2).

3. Résine de coulée selon la revendication 1, caractérisée en ce que le diamètre moyen des particules du constituant (1) est de 35 à 45 µm et du constituant (2) de 1 à 2 µm.

4. Résine de coulée selon la revendication 1, caractérisée en ce que la teneur en constituant (1) est
(a) de 4 à 40% en poids de particules AlN ayant un diamètre de 50 à 100 µm,
(b) de 35 à 70% en poids de particules AlN ayant un diamètre de 20 à inférieur à 50 µm, et
(c) de 4 à 25% en poids de particules AlN ayant un diamètre inférieur à 20 µm,
les pourcentages s'additionnant à 100% en poids.

5. Résine de coulée selon la revendication 1, caractérisée en ce que le constituant (2) est composé de particules ayant un diamètre de 3 µm ou inférieur à 3 µm.

6. Résine de coulée selon la revendication 1, caractérisée en ce qu'elle contient en tant que composant résine un mélange d'éthers diglycidyliques de bisphénols et d'un anhydride d'acide polycarboxylique en tant que durcisseur.

7. Résine de coulée selon la revendication 1, caractérisée en ce qu'elle contient de plus un accélérateur de durcissement.

8. Résine de coulée selon la revendication 1, caractérisée en ce qu'elle contient un éther diglycidylique du bisphénol A ou du bisphénol F.

9. Utilisation de la résine de coulée selon la revendication 1, pour la préparation d'objets façonnés et de matériaux composites conducteurs de chaleur.

10. Utilisation de la résine de coulée selon la revendication 1, comme résine adhésive pour le collage de métaux ou de matériaux de scellement pour les composants électriques et électroniques.
